# FASCICULE DE BREVET EUROPEEN

(11) **EP 0 792 769 B1**
(45) Date de publication et mention de la délivrance du brevet: **10.10.2001**
(21) Numéro de dépôt: 97400425.1
(22) Date de dépôt: 26.02.1997
(51) Int. Cl.: B60L 7/20, B60L 11/12, B60L 11/02

(54) **Alternateur de véhicule automobile fonctionnant comme générateur et comme moteur électrique et procédé pour la commande d'un tel alternateur**
Kraftfahrzeuggenerator, arbeitend als Generator und als elektrischer Motor, und Regelverfahren für einen solchen Generator
Automotive vehicle generator, operating as generator and as electric motor and control process for such a generator

(30) Priorité: 28.02.1996 FR 9602462
(43) Date de publication de la demande: 03.09.1997
(73) Titulaire: VALEO ELECTRONIQUE, 94000 Creteil (FR)
(72) Inventeur: Permuy, Alfred, 92500 Rueil Malmaison (FR)
(74) Mandataire: Le Forestier, Eric

(56) Documents cités:
- FR-A- 2 722 738
- PATENT ABSTRACTS OF JAPAN vol. 95, no. 0011 & JP 07 303301 A (ISUZU MOTORS LTD), 14 Novembre 1995,

## Description

La présente invention est relative à un alternateur de véhicule automobile fonctionnant comme générateur et comme moteur électrique, par exemple pour le démarrage du moteur à combustion du véhicule.

Elle concerne également un procédé pour la commande d'un tel alternateur.

On sait depuis longtemps qu'il est possible de faire fonctionner un générateur de courant - qu'il soit de type dynamo ou de type alternateur - comme un moteur électrique.

Notamment, on connaît déjà, dans le domaine des véhicules automobiles, des groupes moto propulseurs hybrides, c'est à dire comportant à la fois un moteur thermique et un moteur électrique, dans lesquels le moteur électrique présente une structure d'alternateur et est utilisé pour recharger les batteries du véhicule, lorsque le volant d'inertie du véhicule est entraîné par le moteur thermique.

Par ailleurs, il a depuis longtemps été proposé d'utiliser des générateurs de courant en fonctionnement moteur pour remplacer les démarreurs de moteur à combustion.

A titre illustratif, on pourra se référer à la demande de brevet FR - 2.722.738, dans laquelle il est décrit des moteurs hybrides comportant, en complément du moteur électrique, un alternateur monté sur l'arbre du moteur thermique. Cet alternateur joue trois fonctions : il sert à freiner le moteur électrique par entraînement du moteur thermique lors des phases de décélération du véhicule ; il joue également son rôle classique d'alternateur et charge la batterie du véhicule lorsqu'il est entraîné par le moteur à combustion ; il sert enfin à entraîner le moteur à combustion pour son démarrage.

A cet effet, le pont redresseur en sortie de l'induit de l'alternateur sert également de pont de commande des phases de l'alternateur, chaque diode étant associée à un transistor formant interrupteur monté en parallèle entre sa cathode et son anode.

Les différents transistors du pont ainsi constitué sont commandés lors du fonctionnement moteur selon des séquences permettant de faire fonctionner l'alternateur en moteur électrique.

Lorsque l'alternateur est utilisé comme générateur, les transistors sont ouverts et le courant en sortie de l'alternateur est redressé par les diodes.

Or, comme pour tout pont redresseur, lorsque l'alternateur fonctionne en tant que générateur, les diodes sont amenées à chauffer et à dissiper une partie de l'énergie qui les traverse.

Le rendement du générateur en est d'autant diminué.

On notera que l'énergie dissipée représente généralement une part importante du rendement de l'alternateur : de l'ordre de 10 à 20 %.

Un but de l'invention est de proposer un procédé de commande d'une telle machine électrique formant à la fois alternateur et moteur électrique qui permet, lorsque ladite machine est utilisée en tant que générateur, un meilleur rendement de la charge de la batterie du véhicule.

Plus particulièrement, l'invention propose un alternateur de véhicule automobile, fonctionnant comme moteur électrique, par exemple pour le démarrage du moteur à combustion du véhicule, et comme générateur, comportant un rotor bobiné et un stator à plusieurs phases reliées à un pont de diodes et d'interrupteurs pour le redressement et la commande desdites phases, ainsi qu'une unité de gestion pour la commande desdits interrupteurs, caractérisé en ce que, en fonctionnement en mode générateur, l'unité de gestion commande les interrupteurs, de façon à court-circuiter les diodes passantes, l'alternateur comportant des moyens pour la synchronisation de l'unité de gestion par rapport aux changements d'état des diodes.

L'invention propose également un procédé pour la commande d'un tel alternateur.

D'autres avantages de l'invention ressortiront encore de la description qui suit. Cette description est purement illustrative et non limitative. Elle doit être lue en regard des dessins annexés sur lesquels :
- la figure 1 est un schéma illustrant un alternateur conforme à l'invention
- les figures 2a et 2d illustrent une séquence de commande en fonctionnement moteur de l'alternateur de la figure 1.

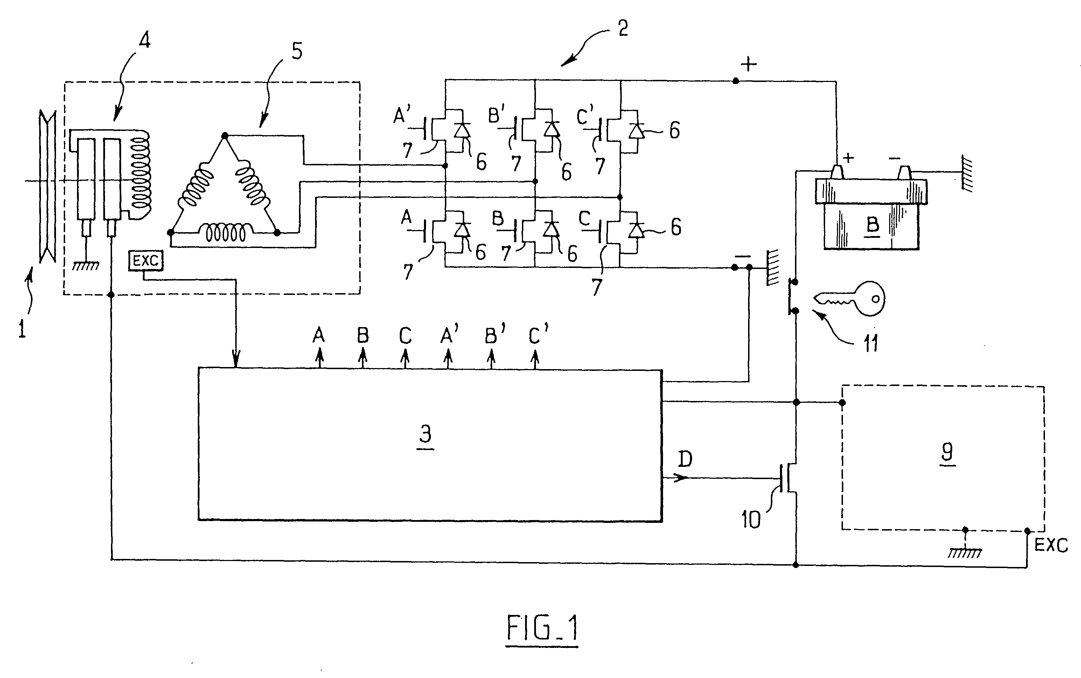

Sur la figure 1, on a représenté une machine tournante triphasée, qui constitue l'alternateur proprement dit, un pont de commande et de redressement 2, ainsi qu'une unité 3 pour la commande de ce pont 2.

De façon connue en soi, la machine tournante 1 formant alternateur comprend :
- un rotor bobiné 4 constituant l'inducteur associé à deux bagues et deux balais par lesquels est amené le courant d'excitation (de l'ordre de quelques ampères) ;
- un stator 5 portant plusieurs bobines, constituant l'induit, qui sont connectées en étoile ou triangle dans le cas le plus fréquent d'une structure triphasée et qui délivrent vers le pont redresseur 2, en fonctionnement alternateur, la puissance électrique convertie (quelques dizaines d'ampères sous une tension de l'ordre de la tension batterie).

Le pont 2 est relié aux différentes phases de l'induit 5 et est monté entre la masse et une borne d'alimentation de la batterie B du véhicule. Il est constitué par une pluralité de diodes 6 formant pont redresseur, ainsi que par une pluralité d'interrupteurs tels que des transistors 7 qui sont montés en parallèle sur les diodes 6 et qui commandent les différentes phases de l'alternateur.

En mode moteur, les diodes fonctionnent en diodes de roues libres et en mode générateur, elles fonctionnent en pont redresseur.

Les transistors 7 sont avantageusement des transistors de type MOSFET. On notera que de tels transistors intègrent par construction une diode entre leur drain et leur source. Ils permettent par conséquent de réaliser le pont 2 de redressement et de commande de phase avec uniquement des composants transistors qui jouent le rôle à la fois d'interrupteurs et de diodes de roue libre.

Le fonctionnement en mode moteur d'un tel alternateur s'effectue en imposant un courant continu dans l'inducteur 4 et en délivrant sur les phases du stator 5 des signaux déphasés de 120°, idéalement sinusoïdaux mais éventuellement trapézoïdaux ou carrés.

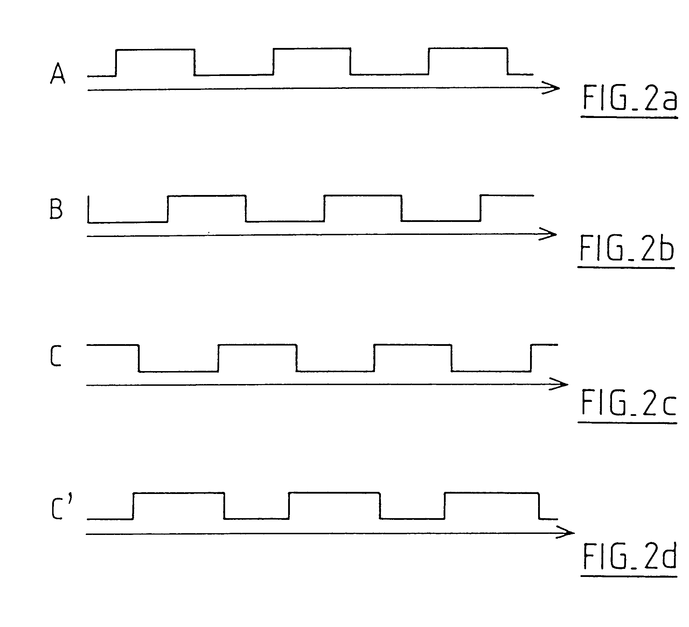

On a illustré sur les figures 2a, 2b et 2c un exemple de séquence de commande des interrupteurs que constituent les transistors 7 par des signaux carrés délivrés par l'unité de commande. Les signaux A, B, C illustrés sur ces deux figures sont des signaux de commande de ceux des transistors 7 du pont 2 qui sont reliés à la masse. Les signaux A', B', C' qui commandent les autres transistors, c'est-à-dire reliés à la batterie, sont des signaux inverses par rapport à ces signaux A, B, C et sans recouvrement avec ceux-ci.

C'est ce qu'on a illustré sur la figure 2d sur laquelle on a représenté le signal C' qui commande le transistor relié à celui commandé par le signal C.

Avec une telle commande, le rotor 4 réalise une rotation d'un tour lorsque chacune des phases décrit un nombre de périodes égales au nombre de paires de pôles du rotor (par exemple 8).

Ce fonctionnement moteur peut par exemple être utilisé pour entraîner au démarrage le moteur thermique du véhicule, ce qui permet, par rapport aux véhicules classiques, de supprimer le démarreur et la couronne d'entraînement du véhicule, ainsi que le câblage de puissance généralement associé au démarreur.

Pour réaliser un tel démarrage du moteur de combustion, les signaux de commande des transistors 7 sont avantageusement des signaux de fréquence variable, dont la fréquence est régulée de façon croissante par l'unité 3, de façon à éviter tout décrochage du rotor 4 par rapport au champ magnétique tournant créé par la stator 5.

La régulation de fréquence est définie soit à partir du calculateur d'injection, soit par un dispositif garantissant à l'alternateur un profil de vitesse permettant le démarrage du moteur thermique.

Immédiatement après le démarrage du moteur, l'unité 3 commande les transistors 7 de façon à fonctionner en mode alternateur.

Conformément à l'invention, les transistors 7 sont alors commandés de façon à court-circuiter les diodes passantes. Ils sont uniquement ouverts aux bornes des diodes non passantes.

Ainsi, il ne circule plus de courant dans les diodes passantes, de sorte que les court-circuits ainsi réalisés permettent d'y réduire les pertes.

Pour synchroniser la commande des transistors 7 par rapport au passage de l'état passant à l'état non passant des diodes 6, l'unité 3 est reliée à des moyens pour détecter le passage des diodes 6 d'un état à un autre. Ces moyens sont par exemple des moyens pour la mesure des courants ou des forces contre-électromotrices développés dans les différentes phases de l'induit 5.

En variante, ces moyens peuvent comporter un capteur, tel qu'une cellule à effet hall, pour mesurer la position angulaire du rotor 4 par rapport au stator 5.

Un tel capteur peut en outre être utilisé pour déterminer la vitesse du rotor, par exemple par comptage d'impulsions dans une fenêtre temporelle donnée, pour permettre à l'unité 3 de détecter le démarrage du moteur thermique et donc de passer du fonctionnement en mode moteur au fonctionnement en mode générateur.

Par ailleurs, de façon également connu en soi, on prévoit des moyens 9 de régulation de tension destinés à maintenir la tension batterie à un niveau convenable.

Il est également prévu un interrupteur 10, par exemple également de type MOSFET dont l'état passant ou bloqué est commandé par l'unité de gestion 3. Cet interrupteur 10 est destiné à court-circuiter le régulateur en mode moteur de sorte que l'induit 5 est alors directement excité par la tension de la batterie.

Enfin, l'unité de gestion 3 peut être telle qu'elle ne commande les transistors 7 pour démarrer le moteur thermique que si elle reçoit de moyens d'émission à l'intérieur du véhicule un signal codé l'autorisant à démarrer le moteur thermique.

On réalise ainsi un verrouillage du démarreur et on empêche en particulier que le moteur puisse être démarrer par un simple court-circuit des bornes du contacteur 11 du véhicule.

## Revendications

1. Alternateur de véhicule automobile, fonctionnant comme moteur électrique, par exemple pour le démarrage du moteur à combustion du véhicule, et comme générateur, comportant un rotor (4) bobiné et un stator (5) à plusieurs phases reliées à un pont (2) de diodes (6) et d'interrupteurs (7) pour le redressement et la commande desdites phases, ainsi qu'une unité de gestion (3) pour la commande desdits interrupteurs (7), **caractérisé en ce que**, en fonctionnement en mode générateur, l'unité de gestion (3) commande les interrupteurs (7), de façon à court-circuiter les diodes (6) passantes, l'alternateur comportant des moyens pour la synchronisation de l'unité de gestion (3) par rapport aux changements d'état des diodes (6).

2. Alternateur selon la revendication 1, **caractérisé en ce que** les interrupteurs (7) sont des transistors MOSFET qui intègrent les diodes (6).

3. Alternateur selon l'une des revendications 1 ou 2, **caractérisé en ce que** les moyens de synchronisation comportent des moyens pour la mesure des courants ou des forces contre-électromotrices développés dans les différentes phases du stator (5).

4. Alternateur selon l'une des revendications 1 ou 2, **caractérisé en ce que** les moyens de synchronisation comportent un capteur pour mesurer la position angulaire de l'inducteur de l'alternateur.

5. Alternateur selon la revendication 4, **caractérisé en ce que** l'unité de gestion (3) comporte des moyens pour, dans une fenêtre temporelle donnée, compter le nombre de rotations de l'inducteur et en déduire le démarrage du moteur thermique.

6. Alternateur selon l'une des revendications précédentes, **caractérisé en ce que** l'unité de gestion (3) comporte des moyens pour la reconnaissance d'un signal codé transmis par des moyens d'émission à l'intérieur du véhicule, ladite unité ne commandant les phases de l'alternateur pour le démarrage du moteur à combustion que si elle reçoit desdits moyens d'émission un signal codé autorisant ce démarrage.

7. Procédé pour la commande d'un alternateur de véhicule automobile, du type fonctionnant comme moteur électrique, par exemple pour le démarrage du moteur à combustion du véhicule, et comme générateur, ledit alternateur comportant un rotor (4) bobiné et un stator (5) à plusieurs phases reliées à un pont (2) de diodes (6) et d'interrupteurs (7) pour le redressement et la commande des phases de l'alternateur, **caractérisé en ce que** l'alternateur comporte des moyens pour détecter l'état des diodes et le passage d'un état à un autre, les interrupteurs (7) étant commandés en fonctionnement en mode générateur de façon à court-circuiter les diodes (6) passantes.

## Patentansprüche

1. Wechselstromgenerator für Kraftfahrzeuge, der als Elektromotor, zum Beispiel zum Starten des Verbrennungsmotors des Fahrzeugs, und als Generator betrieben werden kann, mit einem Schleifringläufer (4) und einem Stator (5) mit mehreren Phasen, die mit einer Brücke (2) aus Dioden (6) und Schaltern (7) zur Gleichrichtung und Steuerung dieser Phasen verkettet sind, sowie mit einer Steuerungseinheit (3) zur Steuerung dieser Schalter (7),
**dadurch gekennzeichnet, daß** im Generatorbetrieb die Steuerungseinheit (3) die Schalter (7) so steuert, daß die durchlassenden Dioden (6) kurzgeschlossen werden, wobei der Wechselstromgenerator Mittel zur Synchronisierung der Steuerungseinheit (3) in Bezug auf die Zustandsänderungen der Dioden (6) aufweist.

2. Wechselstromgenerator nach Anspruch 1,
**dadurch gekennzeichnet, daß** die Schalter MOSFET-Transistoren sind, in die die Dioden integriert sind.

3. Wechselstromgenerator nach einem der Ansprüche 1 oder 2,
**dadurch gekennzeichnet, daß** die Synchronisiermittel Mittel zum Messen der Ströme oder der elektromotorischen Gegenkräfte umfassen, die in den verschiedenen Phasen des Stators (5) entstehen.

4. Wechselstromgenerator nach einem der Ansprüche 1 oder 2,
**dadurch gekennzeichnet, daß** die Synchronisiermittel einen Sensor zum Messen der Winkelstellung des Induktors des Wechselstromgenerators umfassen.

5. Wechselstromgenerator nach Anspruch 4,
**dadurch gekennzeichnet, daß** die Steuerungseinheit (3) Mittel umfaßt, um die Anzahl der Umdrehungen des Induktors innerhalb eines vorgegebenen Zeitrahmens zu erfassen und hieraus das Starten des Wärmekraftmotors abzuleiten.

6. Wechselstromgenerator nach einem der vorhergehenden Ansprüche,
**dadurch gekennzeichnet, daß** die Steuerungseinheit (3) Mittel zur Erkennung eines kodierten Signals umfaßt, das durch Sendemittel im Fahrzeuginneren übertragen wird, wobei diese Einheit die Phasen des Wechselstromgenerators zum Starten des Verbrennungsmotors nur steuert, wenn sie von diesen Sendemitteln ein kodiertes Signal zum Starten empfängt.

7. Verfahren zur Steuerung eines Wechselstromgenerators für Kraftfahrzeuge, der als Elektromotor, zum Beispiel zum Starten des Verbrennungsmotors des Fahrzeugs, und als Generator betrieben werden kann, wobei dieser Wechselstromgenerator einen Schleifringläufer (4) und einen Stator (5) mit mehreren Phasen umfaßt, die mit einer Brücke (2) aus Dioden (6) und Schaltern (7) zur Gleichrichtung und Steuerung der Phasen des Wechselstromgenerators verkettet sind,
**dadurch gekennzeichnet, daß** der Wechselstromgenerator Mittel umfaßt, um den Zustand der Dioden und den Übergang von einem Zustand in einen anderen festzustellen, wobei die Schalter (7) im Generatorbetrieb so gesteuert werden, daß die durchlassenden Dioden (6) kurzgeschlossen werden.

## Claims

1. Motor vehicle alternator, functioning as an electric motor, for example for the starting of the vehicle combustion engine, and as a generator, having a wound rotor (4) and a stator (5) with several phases connected to a bridge (2) of diodes (6) and switches (7) for rectifying and controlling the said phases, and a management unit (3) for controlling the said switches (7), **characterised in that**, functioning in generator mode, the management unit (3) controls the switches (7) so as to short-circuit the diodes (6) which are on, the alternator having means for synchronising the management unit (3) with respect to the changes in state of the diodes (6).

2. Alternator according to Claim 1, **characterised in that** the switches (7) are MOSFET transistors which include the diodes (6).

3. Alternator according to one of Claims 1 or 2, **characterised in that** the synchronisation means include means for measuring the back-electromotive forces or currents developed in the different phases of the stator (5).

4. Alternator according to one of Claims 1 or 2, **characterised in that** the synchronisation means include a sensor for measuring the angular position of the alternator field magnet.

5. Alternator according to Claim 4, **characterised in that** the management unit (3) has means for counting, in a given time window, the number of rotations of the field magnet and deducing therefrom the starting of the thermal engine.

6. Alternator according to one of the preceding claims, **characterised in that** the management unit (3) has means for recognising a coded signal transmitted by transmission means inside the vehicle, the said unit controlling the phases of the alternator for starting the combustion engine only if it receives from the said transmission means a coded signal enabling this starting.

7. Method for controlling a motor vehicle alternator, of the type functioning as an electric motor, for example for starting the vehicle combustion engine, and as a generator, the said alternator having a wound rotor (4) and a stator (5) with several phases connected to a bridge (2) of diodes (6) and switches (7) for rectifying and controlling the phases of the alternator, **characterised in that** the alternator has means for detecting the state of the diodes and the change from one state to another, the switches (7) being controlled whilst operating in generator mode so as to short-circuit the diodes (6) which are conductive.
